# EUROPEAN PATENT APPLICATION

(11) **EP 4 631 826 A1**
(43) Date of publication of application: **15.10.2025**
(21) Application number: 24170310.7
(22) Date of filing: 15.04.2024
(51) Int. Cl.: B62B 3/06, B62B 5/06, B66F 9/06, B66F 9/065

(54) **PALLET TRUCK**

(30) Priority: 14.04.2024 EP 24170127
(71) Applicant: Toyota Material Handling Manufacturing Sweden AB, 595 81 Mjölby (SE)
(72) Inventor: EK, Filip, 587 58 Linköping (SE); EKSTRÖM, Simon, 591 52 Motala (SE); SJÖDIN, Johannes, 583 94 Nykil (SE)
(74) Representative: Zacco Sweden AB

(57) **Abstract**

Pallet truck (1) comprising a lift assembly (10) and a floor engaging assembly (20), wherein the lift assembly (10) comprises at least two elements (13, 14) that are releasable attached to each other. There is further disclosed a tiller handle (22) that comprises a lever assembly (23) that comprises two releasable attached elements. There is further disclosed a package container (50) that comprises the said pallet truck (1).

## Description

The present disclosure is related to a hand pallet truck according to claim 1 and a tiller handle according to Claim 12.

### BACKGROUND

Pallet trucks have been known for a long time. They are sometimes named in various ways, such as pallet jack, pallet trucks, pallet pumps, etc.

The product is a simple way of allowing a pallet with load to be moved in an easy manner. They are often transported with lorries and used to move around pallets in the lorry or off loading, loading. But also in stores, warehouses etc. The hand pallet trucks are very sturdy product that can last for a long time. In general the pallet trucks are not powered. Even though there are many variants that have power.

### SHORT DESCRIPTION OF THE INVENTION

There has been considerably changes requirements due to environmental and effectiveness of transports due in particular to costs, but more importantly for climate change reasons. There thus, has emerged demands for looking into products that in general already from the beginning are considered really environmentally friendly, such as hand pallet trucks, that may in most cases be operated without any type of assisted power. When faced with these new problems it is thus a demand for a new type of pallet truck. There is thus, proposed a pallet truck comprising, a lift assembly that moves up and down when lift and lowering a load. The pallet truck further has a floor engaging assembly that always engages the floor regardless of the lift height. Further the floor engaging assembly comprises-a tiller handle comprising a lever assembly. The pallet truck also has an hydraulic cylinder comprising an hydraulic piston. Also there is at least one main wheel and at least two front wheels or rolls. The lift assembly comprises a load carrier preferably has two forks. The lift assembly also has an hydraulic piston engaging section connected to said load carrier. The hydraulic cylinder is controlled by said handle of the pallet truck. The hydraulic piston is arranged to engage the hydraulic piston engaging section of the lift assembly. The handle being operable to power the hydraulic cylinder such that the hydraulic piston may lift the load carrier when the hydraulic piston is extended and pushing the hydraulic piston engaging section. The lift assembly comprises at least two elements that are releasable attached to each other.

The advantage of the proposed pallet truck is that it may be sent and distributed to the user in a very efficient and environmentally friendly manner. There is for example thinkable to load 4-10 pallet trucks on a standard European pallet of 800 mm * 1200 mm. Also it is possible to repair the pallet truck in an easy manner, separate elements of the pallet truck may be dismounted and replaced or repaired in an easy manner. Further, there may be manufacturing of separate elements of the pallet truck in separate locations. These elements may then be sent separately to the client which then may easily assembly he pallet truck at the site of operation. There is also possible for the user to disassemble the pallet truck and then send it to a new site of operation.

A further development of the pallet truck is disclosed in claim 2.

The advantage is a lighter load carrier. The advantage is also that sound properties is improved as no resonance may be achieved as with a closed load carrier.

A further development of the pallet truck is disclosed in claim 3.

As the upper surface device may be changed, it is possible to change the upper surface device if they have been damaged. By introducing openings better sound properties may be achieved as the resonance box is limited.

A further development of the pallet truck is disclosed in claim 4.

The back assembly is in general a heavy section of a known pallet truck. By implementing an open back assembly the weight of the pallet truck may be reduced or adapted.

A further development of the pallet truck is disclosed in claim 5.

By having the design according to claim 5 there is achieved a much more limited play of the mounting of the lift assembly to the floor engaging assembly. The transversal mount allows for applying controlled forces from side to side of the forks.

A further development of the pallet truck is disclosed in claim 6.

By providing a screw joint assembling the pallet truck may be made by a person without special tools.

A further development of the pallet truck is disclosed in claim 7.

By designing the handle as this, the view of the pallet truck for the operator is improved. The weight of the handle may also be controlled better.

A further development of the pallet truck is disclosed in claim 8.

The finger lever using a wire is very elegant solution that do not prevent the viewing through the handle.

A further development of the pallet truck is disclosed in claim 9.

A very safe mounting of the axle to the lift assembly is achieved.

A further development of the pallet truck is disclosed in claim 10.

The D shape gives a very easy way of making the cut out.

A further development of the pallet truck is disclosed in claim 11.

By making a framework construction a pallet truck that may be environmentally friendly transported is achieved. Several pallet trucks may be transported on one standard pallet.

There is further proposed a tiller handle according to claim 12.

The handle may in this way be mounted to a known pallet truck and giving better visibility to this truck.

There is further proposed a tiller handle according to claim 13.

By using the wire the visibility is further improved through the handle.

There is further proposed a packaging box according to claim 14.

The transport properties for the pallet truck is vastly improved.

There is further propose a package container according to claim 15.

This provides for a very self-sufficient package, which may be assembled without any particular or special tools.

### LIST OF DRAWINGS

Fig. 1 Pallet truck according to one aspect of the invention.
Fig.2 Pallet truck of Fig. 1 from the side.
Fig. 3 Pallet truck of Fig. 1 from above.
Fig. 4 Lift assembly of the pallet truck of Fig. 1
Fig. 5 Floor engaging assembly of the pallet truck of Fig. 1
Fig. 6 Exploded view of back rest of the pallet truck of Fig. 1
Fig. 7 Exploded view of the back rest and the load carrier of the pallet truck of Fig. 1, i.e. the essential elements of the lift assembly.
Fig. 8 A pallet truck according to the disclosure with upper surface devices on the load carrier.
Fig. 9 The pallet truck of Fig. 8 from a three dimensional direction.
Fig. 10 Exploded view of a Handle for a pallet truck as the pallet truck of Fig. 1.
Fig. 11 Side view of the handle of Fig. 10
Fig. 12 View from the longitudinal direction of the handle of fig. 10.
Fig. 13 Three dimensional view of the handle of fig. 10.
Fig. 14 Package container for the pallet truck of the disclosure.

### DETAILED DESCRIPTION

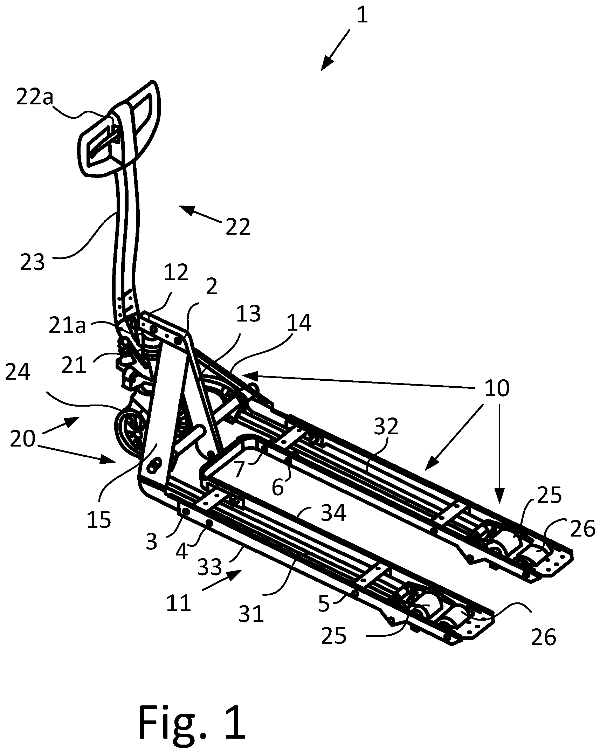

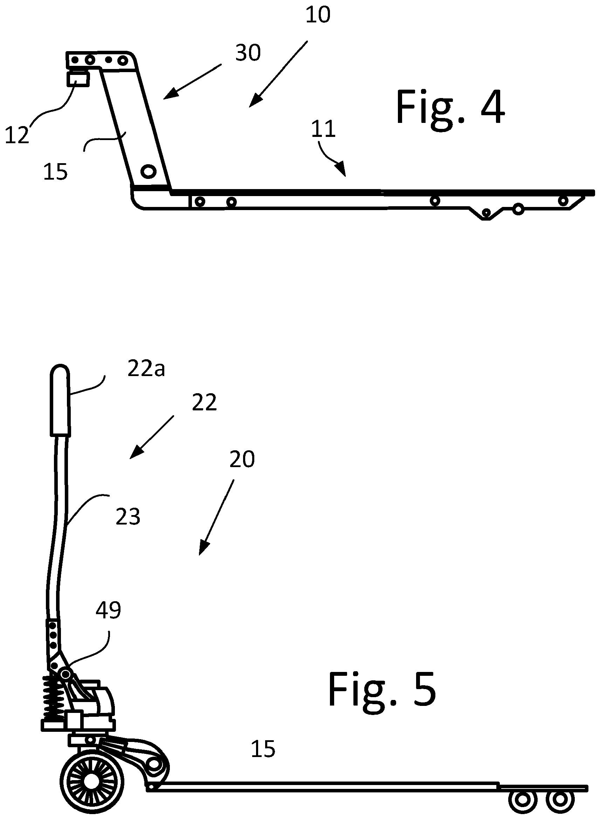

The present disclosure is related to a pallet truck or a hand truck or the like. It is thus a non-powered machined that is essentially only uses hand powered of an operator to be operated, or moved. Fig. 1, 2 and 3 discloses the pallet truck 1. In general the pallet truck 1 has two assemblies, a lift assembly 10 and a floor engaging assembly 20, Fig. 4 and Fig. 5. The lift assembly 10 comprises a load carrier 11, which in general is made up of two forks 31, 32. On the lift assembly 10 there is a hydraulic piston engaging section 12, that is arranged to receive the end of a hydraulic piston 21a used for lifting the lift assembly when lifting a pallet with a load or the like. Engaging in this disclosure does in general mean that there is provided a surface of the lifting assembly that may receive a force on it. Thus, engaging does not mean that there is an attachment made to the engaging section 12. It may be a flat surface.

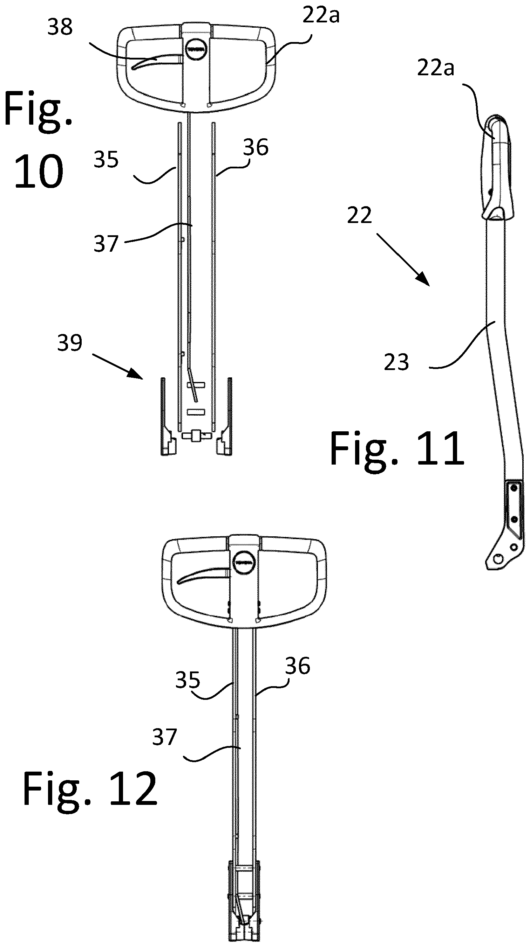

The floor engaging assembly 20 is in general the part of the pallet truck 1, that is not moving in vertical direction, when lifting or lowering a load, Fig 5. The floor engaging assembly comprises an hydraulic cylinder 21 with the comprised hydraulic piston 21a. The floor engaging assembly 20 comprises in general a tiller handle 22. The handle 22 has a hand grip 22a, and also a lever assembly 23, see Fig. 1, Fig. 10, 11, 12 and 13. The handle 22 is in general attached in a first rotating joint for steering the pallet truck 1 and mechanically connected to the hydraulic cylinder 21 through a mechanical pump. A second horizontal rotating joint makes the handle to be able to pivot in vertical direction. Thus, the handle 22 is used both for pulling and pushing the pallet truck 1, and also steering the pallet truck 1, but also for pumping oil into the hydraulic cylinder 21 by using the horizontal rotating joint 49 and moving the handle up and down.

The pallet truck has one main wheel 24. Preferably the main wheel 24 is two wheels applied coaxially. On the load carrier 11 underside there are wheels or rolls 25, 26, in general these are situated nearer the end of the load carrier 11. Two rolls 25, 26 under each load carrier is a possible way to arrange this.

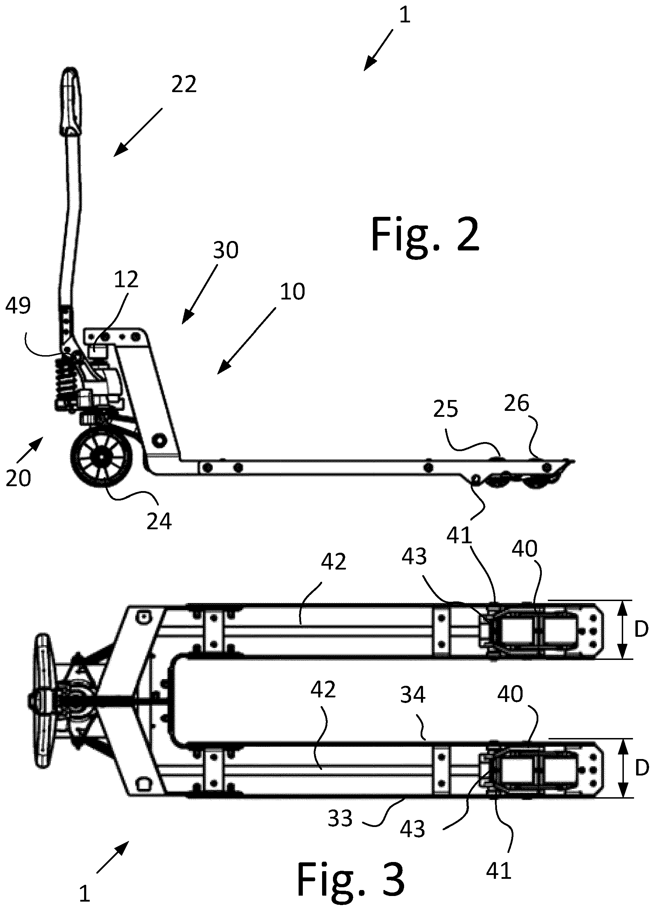

The rolls 25, 26 are attached to a lift assembly 40 Fig. 3. The lift assembly 40 is powered by a linkage element 42 that extends to a mechanical arrangement at the hydraulic cylinder 21. The lift assembly 40 in general is mechanically synchronized with the lifting point at the hydraulic piston engaging section 12 of the lift assembly 10, such that lifting of the load carrier 11 is made in a levelled manner.

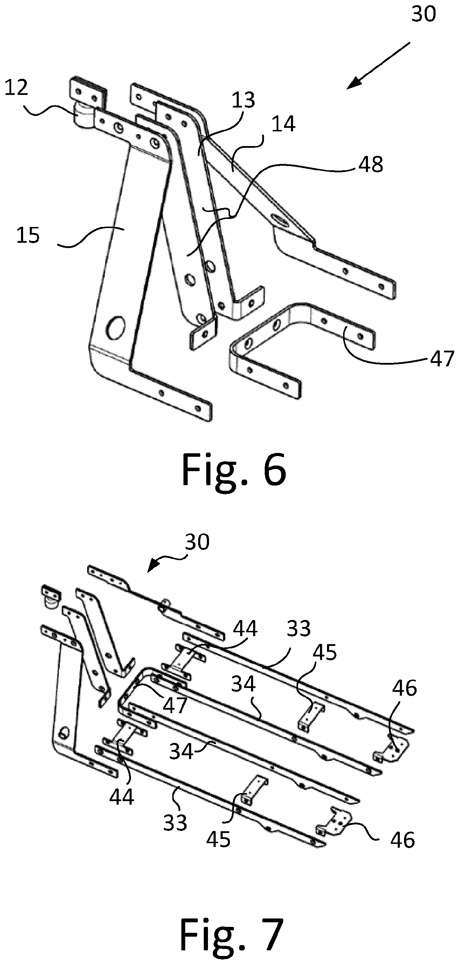

The lift assembly 10 comprises at least two elements 13 and 14 that are releasable attached to each other, see fig. 6 and 7. In general the lift assembly 10 a framework of elements that are releasable attached to each other, Fig. 7. The realisable function is in general provided by screw attachments, or any other attachment that provides for realisable functionality. In Fig. 6 and 7 there are disclosed exploded views of the elements in the lift assembly 10. Thus, it is a preferred variant to have the lift assembly being designed as a framework, including the two elements that are releasable attached to each other.

A back assembly 30 of the pallet truck is in general position at one end of the load carrier 11. The back assembly as disclosed in Fig. 6 in an exploded view may be constituted by a group of elements and in general a middle element assembly 48 is provided for giving the stability to the back assembly 30. The middle element assembly 48 may have a two middle elements 13 with a mirrored shape. The middle element assembly 48 may join the forks and the hydraulic piston engaging section 12, and two side angled side elements 13, 14 of the back assembly 30, together. All the elements of the back assembly 30 is releasable attached to each other, preferably by screw attachment. The angled side elements 15 and 14 of the back assembly 30 together with the middle element assembly 48, creates a stable and very strong back assembly for giving the pallet truck 1 a side torque resistance. The angled side elements 14 and 15 have a protruding section in the lower part, for attaching to the load carrier 11.

The load carrier 11 comprises two forks 31, 32. Each fork comprises in general two elongate elements 33, 34, extending in horizontal direction. The two elongate elements 33, 34 have an extension in vertical direction. The elements has the visual appearance of two beams. The two elements are relasably attached to each other with a predetermined distance D from each other, Fig. 3. The load carrier thus is made up from relasably attached elements, as may be seen in Fig. 7. Each fork may have a first distance element 44 at the back assembly 30. Each fork may have a second distance element 45 at a midsection of each fork. Each fork may have an end distance element 46 at the end of each fork. The end distance element 46 may also constitute the tip of each fork. The distance elements 44, 45, 46 are designed preferably such that they may be attached together with the two element 33, 34 that are elongate, such that a fork is achieved. A further mid element 47 may join each fork together, as seen in Fig. 7, preferably also join the middle element 48 of the back assembly 30. The mid element 47 may have a simple U-shape, Fig. 7. The distance elements 44, 45, 46, are preferably designed with a flat upper surface having a predetermined surface. By arranging the distance elements in this way, the pallet truck 1 may handle a load even if no upper cover, or upper surface device 27 is attached to each fork.

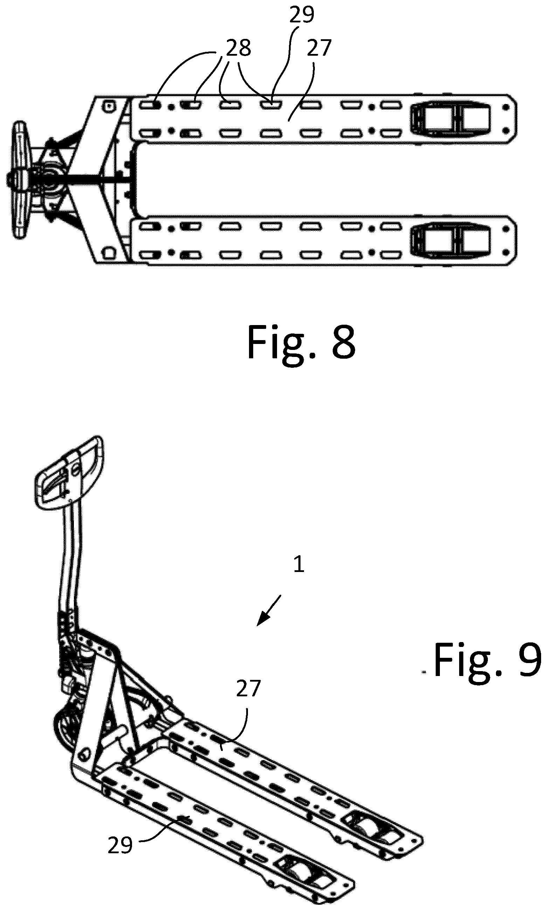

The lift assembly 10 may thus, comprise an upper surface device 27 to the load carrier 11, Fig. 8 and 9. Thus, the load carrier 11, may lid type upper surface devices 27. The upper surface devices 27 may be attached with screws to the lift assembly 10 preferably to the distance elements 44, 45, 46 of each fork. The upper surface devices 27 may have a group 28 of through holes 29. The holes 29 may have elongated shape, but any shape is suitable.

The lift assembly including the load carrier 11 is thus preferred to be an essentially open design comprising a group of elements 12, 13, 14, 15, 48, 33, 34, 44, 45, 46, 47 etc. releasable attached to each other. The open design may be called a framework.

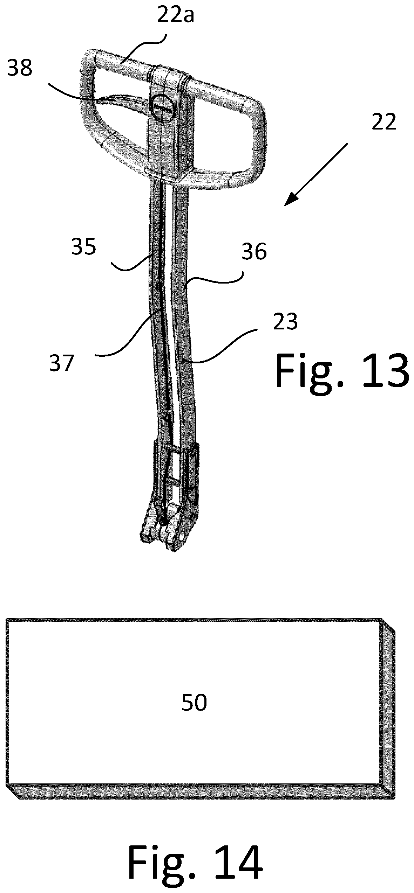

The lever assembly 23 of the handle 22 may in general comprise two parallel elements 35, 36 separated in width direction. Thus, in the same way as the discussed load carrier the lever assembly 23 of the handle comprises two beam like elements 35, 36. The two elements 35, 36 is releasable attached to each other. The two elements 35, 36, is attached at a distance from each other. Thus, it is possible to view through the lever assembly 23, Fig. 13. The lever assembly 23 further has a wire 37. The wire 37 is in general running inside a cover tube. The wire 37 is attached to the hydraulic cylinder such that the pressure of the hydraulic cylinder 21 may be released by means of a traction of the wire 37.

The handle 22 of the pallet truck 1 comprises a finger lever 38. For operating the wire 37, and the release valve of the hydraulic cylinder 21, for lowering a lifted load.

The lift assembly 40 comprises a joint 41 that comprises a fixed axle 43, around which the lift assembly may rotate for using the lift assembly 40 to move the rollers 25 away from the load carrier 11 to push it upwards in a lifting situation. The force to the lifting assembly 40 is provided from a linkage element 42. The linkage element 42 is in general a rod that is pushed on by a further linkage assembly powered by the lifting of the hydraulic piston 21a at the hydraulic piston engaging section 12. The axle 43 is in general fixed transversally over the fork width, in order to prevent the axle 43 from rotating. A sliding bearing to the lift assembly 42 provides for rotation. The axle 43 is preferred to have a cut-out at one or both ends. The cut-out may provide the axle 43 with a D-shaped section at the end or both ends. The cut-out is then positioned in a hole of the same shape in the side of the fork 31. The same arrangement is made to the other fork 32. The hole may be made directly in the elements 33, 34 that makes up the elongated sides of the fork 31. It may also be made in a separated element that in turn is connected to the elements 33, 34, with beam like shape.

The present disclosure is related to the Tiller handle 22 as such, the handle 22 comprises a hand grip 22a. Further there is comprised a lever assembly 23. The lever assembly 23 of the handle 22, comprises two parallel elements 35, 36 that are separated in width direction, such that at least a section of the lever assembly 23 may be viewed through. The two elements 34, 35 of the lever assembly 23 are releasable attached to each other. Thus, also the handle may be resembled to a framework design.

The tiller handle 22 , wherein the handle 22 comprises a finger lever 38 for powering for transferring a force through a mechanical connection between the finger lever 38 and a bottom section 39 of the lever assembly 23, wherein this mechanical connection comprises a wire 37 connected to the finger lever 38 such that the wire 37 moves back and forth with action on the finger lever 38.

The tiller handle 22 may preferably by attached to a pallet truck 1 as disclosed above. The tiller handle may also be attached to an existing pallet truck made with conventional technology.

The pallet truck 1 may thus be in an state where it is not assembled. In this state the pallet truck may be packaged in a package container 50 for easy transport to a user site. It is possible to include all screws and also even the tools needed for assembling the pallet truck 1 in the container 50. The container may be a plastic bac or a well paper container or paper board container, even a wooden container or a plastic box container. Preferably, the container has the measures so that it fits a standard pallet, preferably several pallet trucks 1 may be loaded onto a standard pallet, for easy transport of a group of pallet trucks 1.

## Claims

1. Pallet truck (1), comprising,
a lift assembly (10) that moves up and down when lift and lowering a load,
a floor engaging assembly (20) that always engages the floor regardless of the lift height,
wherein the floor engaging assembly (20) comprises:
- a tiller handle (22) comprising a lever assembly (23),
- an hydraulic cylinder (21) comprising an hydraulic piston (21a),
- at least one main wheel (24) and at least two front wheels (25) or rolls,
wherein the lift assembly (10) comprises:
- a load carrier (11) preferably as two forks (31, 32),
- an hydraulic piston engaging section (12) connected to said load carrier (11),
wherein the hydraulic cylinder (21) is controlled by said handle (22), the hydraulic piston (21a) being arranged to engage the hydraulic piston engaging section (12) of the lift assembly (10), the handle (22) being operable to power the hydraulic cylinder (21) such that the hydraulic piston (21a) may lift the load carrier (11) when the hydraulic piston (21a) is extended and pushing the hydraulic piston engaging section (12),
**characterized in that**
the lift assembly (10) comprises at least two elements (11, 13, 14, 15) that are releasable attached to each other.

2. Pallet truck (1) according to claim 1, wherein the load carrier (11) is an essentially open design comprising a group of elements ( 33, 34, 44, 45, 46, 47) releasable attached to each other.

3. Pallet truck (1) according to any of the claims above, wherein the lift assembly (10) comprises a releasable attached upper surface device (27) to the load carrier, the upper surface device is flat and preferably comprises at a group (28) of through holes (29) in vertical direction, even more preferred the group (28) of through holes comprises at least two holes for each upper surface device (27) .

4. Pallet truck (1) according to any of the claims above, wherein the lift assembly (10) comprises a back assembly (30) extending upwards, wherein the back assembly (30) comprises at least two releasable attached elements (13, 14), preferably three releasable attached elements (13, 14, 15).

5. Pallet truck (1) according to any of the claims above, wherein each fork (31, 32) comprises two elements (33, 34) which are extending in horizontal direction with a with a width section extending in vertical direction, such as creating two beams in the elongate direction of the fork (31), wherein the two elements (33, 34) are releasable attached in parallel at a predetermined transversal distance (D) from each other, preferably the attachment in parallel is made with at least one distance element (44) for each fork (31, 32).

6. Pallet truck (1) according to any of the claims above, wherein at least one of the elements of the lift assembly (10) is releasable attached by means of a screw joint (3, 4, 5, 6).

7. Pallet truck (1) according to any of the claims above, wherein the lever assembly (23) of the handle (22), comprises two parallel elements (35, 36) that are separated in width direction, such that at least a section of the lever assembly (23) may be viewed through, preferably the two elements (34, 35) of the lever assembly (23) are releasable attached to each other.

8. Pallet truck (1) according to claim 7, wherein the handle (22) comprises a finger lever (38) for powering a valve on the hydraulic cylinder through a mechanical connection between the two, wherein this mechanical connection comprises a wire (37).

9. Pallet truck (1) according to any of the claims above, wherein the pallet truck comprises a lift assembly (40) acting on the front wheels/rollers (25; 26), such that the front rollers (25; 26) are moved away from the load carrier (11), when the hydraulic piston (21a) is extended, wherein the lift assembly (40) comprises a joint (41) and a linkage element (42) for providing the lift action, wherein the joint (41) is comprises a fixed axle (43) that has a cut-out engaging in a corresponding cut-out of at least one or preferably both of vertical of the side elements (33, 34) of the respective fork, thus fixating the axle in a releasable manner.

10. Pallet truck (1) according to claim 9, wherein the cut-out gives the axle a D shaped section at the cut out, that is operable to enter a corresponding cut-out and/or hole in the side elements (33, 34).

11. Pallet truck (1) according to any of the claims above, wherein the lift assembly (10) is a framework design that includes a group of elements (12, 13, 14, 15, 33, 34, 44, 45, 46, 47) that are relasable attached to each other to make up the framework, preferably the group of elements includes at least three elements which is comprised in a back assembly 30, and at least three elements (33, 34, 44,) that is comprised in a load carrier (11).

12. Tiller handle (22) for a pallet truck (1), wherein said handle comprises a handle for gripping (22a), and a lever assembly (23), wherein the lever assembly (23) of the handle (22), comprises two parallel elements (35, 36) that are separated in width direction, such that at least a section of the lever assembly (23) may be viewed through, preferably the two elements (34, 35) of the lever assembly (23) are releasable attached to each other.

13. Tiller handle (22) according to claim 12, wherein the handle (22) comprises a finger lever (38) for powering for transferring a force through a mechanical connection between the finger lever (38) and a bottom section (39) of the lever assembly (23), wherein this mechanical connection comprises a wire (37) connected to the finger lever (38) such that the wire (37) moves back and forth with action on the finger lever (38).

14. Package container (50) comprising a pallet truck according to any of the claims 1-11, wherein the pallet truck (1) in the package is not assembled, such that the releasable attached elements (13, 14) are separated in the package.

15. Package container (50) according to claim 14, wherein the package container (50) comprises attachment means, preferably screws, and the necessary tools for assembling the pallet truck (1).
